# EUROPÄISCHE PATENTANMELDUNG

(11) **EP 3 248 452 A1**
(43) Veröffentlichungstag der Anmeldung: **29.11.2017**
(21) Anmeldenummer: 17166207.5
(22) Anmeldetag: 24.08.2015
(51) Int. Cl.: A01G 9/02

(54) **HALTE- UND /ODER FÖRDERSYSTEM**

(30) Priorität: 03.09.2014 DE 202014104123 U
(62) Teilanmeldung aus: 15762767.0
(71) Anmelder: B+M Textil GmbH & Co. KG, 09465 Sehmatal-Cranzahl (DE); Weisel, Niklas Andreas Wilm, 09456 Annaberg-Buchholz (DE)
(72) Erfinder: Weisel, Niklas Andreas Wilm, 09456 Annaberg-Buchholz (DE)
(74) Vertreter: Steiniger, Carmen

(57) **Zusammenfassung**

Die vorliegende Erfindung betrifft ein Halte- und/oder Fördersystem mit wenigstens einer sich linien- oder streifenförmig erstreckenden Haltevorrichtung mit wenigstens einem einen Aufnahmebehälter oder ein Tragelement ausbildenden und an der Haltevorrichtung zu haltenden und/oder zu befördernden Objekt. Erfindungsgemäß ist das wenigstens eine Objekt wenigstens eine einseitig offene Tasche ist und die Haltevorrichtung ein textiles Breitband mit den Taschen, wobei wenigstens zwei Haltevorrichtungen vertikal an wenigstens einer sich horizontal erstreckenden Aufhängeeinrichtung befestigt sind und die Haltevorrichtungen jalousieartig und/oder lamellenvorhangartig in ihrer Ausrichtung veränderbar miteinander verbunden sind.

## Beschreibung

Die vorliegende Erfindung betrifft ein Halte- und/oder Fördersystem mit wenigstens einer sich linien- oder streifenförmig erstreckenden Haltevorrichtung mit wenigstens einem einen Aufnahmebehälter oder ein Tragelement ausbildenden und an der Haltevorrichtung zu haltenden und/oder zu befördernden Objekt.

Es ist die Aufgabe der vorliegenden Erfindung, ein Halte- und/oder Fördersystem der oben genannten Gattung zur Verfügung zu stellen, das einfach und preiswert herstellbar ist, eine sichere Halterung von Objekten oder Stoffen und/oder einen sicheren Transport von Objekten oder Stoffen ermöglicht und in unterschiedlichen Bereichen flexibel anwendbar ist.

Die Aufgabe wird durch ein Halte- und/oder Fördersystem mit wenigstens einer sich streifenförmig erstreckenden Haltevorrichtung mit wenigstens einem einen Aufnahmebehälter oder ein Tragelement ausbildenden und an der Haltevorrichtung zu haltenden und/oder zu befördernden Objekt gelöst, wobei das wenigstens eine Objekt wenigstens eine einseitig offene Tasche ist, und die Haltevorrichtung ein textiles Breitband mit den Taschen ist, wobei wenigstens zwei Haltevorrichtungen vertikal an wenigstens einer sich horizontal erstreckenden Aufhängeeinrichtung befestigt sind und die Haltevorrichtungen jalousieartig und/oder lamellenvorhangartig in ihrer Ausrichtung veränderbar miteinander verbunden sind.

In der Tasche kann wenigstens ein Substrat und/oder wenigstens eine Pflanze und/oder wenigstens ein Feststoff und/oder wenigstens eine Schüttung und/oder wenigstens ein schwammartiges Material vorgesehen sein.

Vorzugsweise sind die Verbindungsstellen bei der vorliegenden Erfindung gewebte Verbindungsstellen.

Das erfindungsgemäße Halte- und/oder Fördersystem kann unter anderem zur Trocknung von Objekten oder von in den Taschen vorgesehenen Stoffen eingesetzt werden. Hierfür sind wenigstens zwei Haltebänder vertikal an einer sich horizontal erstreckenden Aufhängeeinrichtung befestigt.

Dabei sind die Haltebänder so miteinander verbunden, dass sie jalousieartig und/oder lamellenvorhangartig in ihrer Ausrichtung veränderbar sind.

Wird das Halte- und/oder Fördersystem beispielsweise mit Pflanzen bestückt, empfiehlt sich zur geeigneten Pflanzenbewässerung eine Ausführungsform, in der die Aufhängeeinrichtung ein Kanalsystem mit einem Fluidzulauf und einem Fluidablauf aufweist.

Das erfindungsgemäße Halte- und/oder Fördersystem kann in einer speziellen Ausführungsform auch zur Gewässerreinigung als Bandskimmer genutzt werden. In diesem Fall ist die wenigstens eine Haltevorrichtung an einem Mitnehmer vorgesehen, mit dem sie durch eine Flüssigkeit führbar ist, wobei an dem Mitnehmer wenigstens ein Abstreifer zum Herausdrücken von Flüssigkeit aus der Haltevorrichtung und/oder wenigstens einem Objekt der Haltevorrichtung und/oder des Inhaltes wenigstens einer Tasche der Haltevorrichtung vorgesehen ist.

Ausführungsformen von Halte- und/oder Fördersystemen, deren Aufbau, Funktion und Vorteile werden im Folgenden anhand von Figuren näher erläutert, wobei
- Figur 1: schematisch eine Ausführungsform einer Haltevorrichtung eines Halte- und/oder Fördersystems mit mehreren Objekten, wie teilweise ineinander stapelbaren kegelstumpfförmigen Gefäßen und einem Quader zur Unterbringung verschiedener Gegenstände, in einer perspektivischen Darstellung zeigt;
- Figur 2: schematisch einen Ausschnitt einer weiteren Ausführungsform einer Haltevorrichtung eines Halte- und/oder Fördersystems in einer perspektivischen Darstellung zeigt, in welche ein Rohrstutzen zur Schlauchverdickung eingebracht ist;
- Figur 3: schematisch eine nächste Ausführungsform einer Haltevorrichtung eines Halte- und/oder Fördersystems in einer Draufsicht zeigt, bei welcher zwei Führungselemente mit daran vorgesehenen Verdickungsstellen zum Einsatz kommen, zwischen welchen eine Verbindungsbrücke gehalten wird;
- Figur 4: schematisch eine noch eine weitere Ausführungsform einer Haltevorrichtung eines Halte- und/oder Fördersystems in einer perspektivischen Darstellung zeigt, bei der das Führungselement als Fluidleitung ausgebildet ist;
- Figur 5: schematisch ein Detail einer möglichen Ausführungsform einer Haltevorrichtung eines Halte- und/oder Fördersystems in einer perspektivischen Darstellung zeigt, bei der das an dem Führungselement gehaltene Objekt ein Kegelstumpf mit einem inneren Haltering ist;
- Figur 6: schematisch ein Detail der Haltevorrichtung aus Figur 1 in einer perspektivischen Darstellung zeigt, bei der zwei kegelstumpfförmige Objekte ineinander gesteckt sind;
- Figur 8: schematisch einen Ausschnitt einer weiteren Ausführungsform einer Haltevorrichtung eines Halte- und Fördersystems in einer perspektivischen Darstellung zeigt, die aus zwei, unter Ausbildung von Taschen verbundenen Bändern ausgebildet ist, wobei mehrere zweite Bänder quer zu dem ersten Band vorgesehen sind;
- Figur 9: schematisch eine Ausbildung eines erfindungsgemäßen Halte- und Fördersystems in einer perspektivischen Darstellung zeigt, bei dem eine Anzahl streifenförmiger Haltevorrichtungen an einer Aufhängeinrichtung aufgehängt sind; und
- Figur 10: schematisch eine andere Ausbildung eines erfindungsgemäßen Halte- und Fördersystems in einer perspektivischen Darstellung zeigt, in der das Halte- und/oder Fördersystem mit einem Mitnehmer und einer Abstreifeinrichtung versehen ist und zur Reinigung einer Flüssigkeit einsetzbar ist.

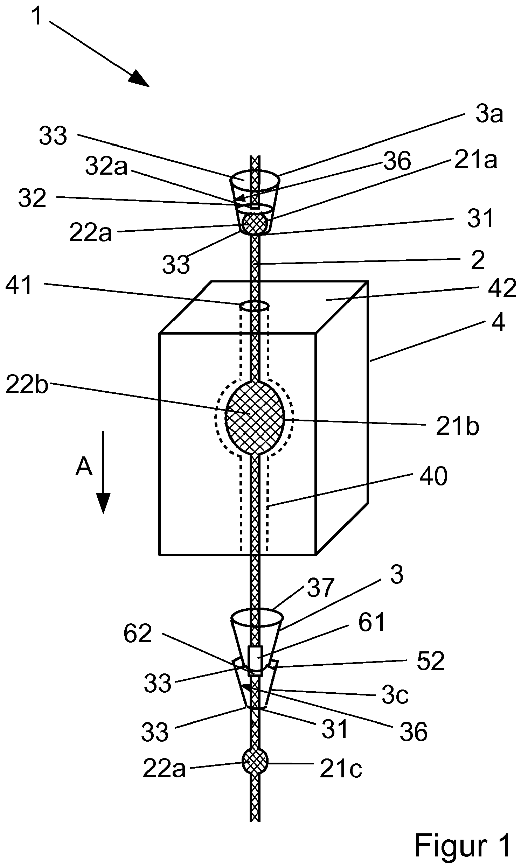

Figur 1 zeigt schematisch eine Ausführungsform einer Haltevorrichtung 1 eines Halte- und/oder Fördersystems in einer perspektivischen Darstellung. Die Haltevorrichtung 1 weist ein sich der Längsausrichtung A der Haltevorrichtung 1 erstreckendes Führungselement 2 auf. Das Führungselement 2 ist ein Schlauch mit dehnbarem Durchmesser. Der Schlauch weist eine netzartige Struktur auf und ist in der dargestellten Ausführungsform geflochten. In anderen, nicht dargestellten Ausbildungen der vorliegenden Erfindung kann der Schlauch beispielsweise auch gestrickt sein.

Das als Schlauch ausgebildete Führungselement 2 weist in der Ausführungsform von Figur 1 an mehreren Stellen Verdickungsstellen 21 a, 21 b, 21 c auf. Diese Verdickungsstellen 21 a, 21 b, 21 c sind jeweils dadurch in dem Führungselement 2 ausgebildet, dass in dem Inneren des Schlauches an der Verdickungsstelle 21 a, 21 b, 21 c wenigstens ein Füllkörper 22b und/oder eine Menge von Füllmaterial 22a vorgesehen ist, durch den oder das das Schlauchmaterial an der Verdickungsstelle 21 a, 21 b, 21 c gedehnt ist. Ober- und unterhalb der Verdickungsstellen 21 a, 21 b, 21 c weist der Schlauch seinen ungedehnten Durchmesser auf, zieht sich also nach dem Umschließen des Füllkörpers 22b oder Füllmaterials 22a wieder zusammen und hält damit den Füllkörper 22b oder das Füllmaterial 22a in seiner Position in dem Schlauch.

An dem Führungselement 2 sind mehrere Objekte vorgesehen. So befindet sich oberhalb der Verdickungsstelle 21 c ein Objekt in Form eines Kegelstumpfs 3c. Der Kegelstumpf 3c ist mit seiner eine Durchgangsöffnung 31 für das Führungselement 2 aufweisenden Kegelstumpfspitze 31c nach unten ausgerichtet, wobei die Kegelstumpfspitze 33 auf der Verdickungsstelle 21c aufsitzt. Dies ist dadurch möglich, weil der Außendurchmesser der Verdickungsstelle 21c größer als der Innendurchmesser der Durchgangsöffnung 31 ist. Der Kegelstumpf 3c ist nach oben offen, also trichterartig ausgebildet.

Innerhalb des Kegelstumpf 3c ist ein Haltegitter 52 vorgesehen, das an der Kegelstumpfinnenwand 36 des Kegelstumpfs 3c befestigt ist. In anderen, nicht gezeigten Ausführungsformen der Erfindung kann das Haltegitter 52 auch an einem Kegelstumpfbodenrand 37 befestigt sein. In das Haltegitter 52 ist von oben ein weiterer, mit seiner Kegelstumpfspitze 33 ausgerichteter Kegelstumpf 3 eingesetzt. In der Kegelstumpfspitze 33 des Kegelstumpfs 3 ist wiederum eine Durchgangsöffnung 31 vorgesehen, durch die das Führungselement 2 hindurchgeführt ist.

Im Inneren der Kegelstumpfspitze 33 des Kegelstumpfs 3 ist um das Führungselement 2 eine Haltehülse 61 vorgesehen, die ein auf die Haltehülse 61 steckbares oder mit dieser verschraubbares Hülsengegenstück 62 aufweist. Die Haltehülse 62 ist in der Ausführungsform von Figur 1 oberhalb des Haltegitters 52 und das Hülsengegenstück unterhalb des Haltegitters 52 vorgesehen, wobei Haltehülse 61 und Hülsengegenstück 62 miteinander lösbar verbunden sind. Dadurch kann der Kegelstumpf 3 stabil in seiner Position auf dem Kegelstumpf 3c gehalten werden, ohne dass der Kegelstumpf 3 vollständig in den Kegelstumpf 3c hineinrutscht. Ein Teil der offenen Oberfläche des unteren Kegelstumpfs 3c bleibt demnach offen. Auch der Kegelstumpf 3 ist oben offen.

Beide Kegelstümpfe 3c, 3 werden durch die Verdickungsstelle 21 c an dem Führungselement 2 übereinander gehalten, und der Kegelstumpf 3c stützt den Kegelstumpf 3.

Weiter oben ist an dem Führungselement 2 ein weiteres Objekt in Form eines Quaders 4 vorgesehen. Der Innenraum des hier innen hohl ausgebildeten Quaders 4 kann beispielsweise zur Aufbewahrung verschiedener Dinge genutzt werden. Der Quader 4 weist einen durch ihn hindurch führenden Durchgangskanal 40 auf, durch den das Führungselement 2 geführt ist. Der Durchgangskanal 40 beginnt an einem als Halteplatte 42 dienenden Deckel des Quaders 4 mit einem Durchgangsloch 41, dessen Durchmesser so groß ist, dass das Führungselement 2 in den Quader 4 hineingeführt werden kann. Das Führungselement 2 weist innerhalb des Durchgangkanals 40 eine Verdickungsstelle 21 b auf, in der ein Füllkörper 22b, wie beispielsweise ein Stein vorgesehen ist. Der Außendurchmesser der Verdickungsstelle 21 b ist größer als der Durchmesser der Durchgangsöffnung 41, sodass die Verdickungsstelle 21 b einen Gegenhalt für den Deckel 42 des Quaders 4 ausbildet und damit der Quader durch die darin vorgesehene Verdickungsstelle 21 b des Führungselementes 2 an dem Führungselement 2 gehalten wird.

Oberhalb des Quaders 4 ist an dem Führungselement 2 von Figur 1 ein weiterer mit seiner Kegelstumpfspitze 33 nach unten ausgerichteter Kegelstumpf 3a gehalten. In der Kegelstumpfspitze ist wiederum eine Durchgangsöffnung 31 für den Durchgang des Führungselementes 2 vorgesehen. In dem Kegelstumpf 3a ist ein mit der Kegelstumpfinnenwand 36 verbundener Haltering 32 vorgesehen, der eine Durchgangsöffnung 32a besitzt, durch die ebenfalls das Führungselement 2 hindurchgeführt ist. Zwischen dem Haltering 32 und der in der Kegelstumpfspitze 33 vorgesehenen Durchgangsöffnung 31 weist das Führungselement 2 eine Verdickungsstelle 21 a auf. Die Verdickungsstelle 21 a ist in dem gezeigten Ausführungsbeispiel mit einer Menge an Füllmaterial 22a befüllt, durch das der Schlauch an der Verdickungsstelle 21 a derart gedehnt ist, dass sein Au-ßendurchmesser größer als die Durchgangsöffnung 32a in dem Haltering 32 und als die Durchgangsöffnung 31 in der Kegelstumpfspitze 33 des Kegelstumpfs 3a ist. Dadurch wird die Verdickungsstelle 21 a zwischen den beiden Durchgangsöffnungen 32a und 31 gehalten, womit der Kegelstumpf 3a an seinem Platz an dem Führungselement 2 gehalten wird.

Das Halte- und/oder Fördersystem aus Figur 1 fasst somit viele mögliche Ausbildungsformen in einer Darstellung zusammen. Bei allen in Figur 1 gezeigten Ausbildungen kommt jeweils eine in der Schlauchkordel integrierte, in Form der Verdickungsstellen 21 a, 21 b, 21 c vorgesehene Fixierung zum Einsatz. An der jeweiligen Verdickungsstelle 21 a, 21 b, 21 c können Gegenstände, die die Kordel, also den Schlauch, umschließen, aufgestellt oder geometrisch passend umschlossen werden. Bei dem gezeigten Ausführungsbeispiel ist bei jedem an dem Schlauch vorgesehenen Objekt noch Raum für ablaufende Flüssigkeit vorhanden.

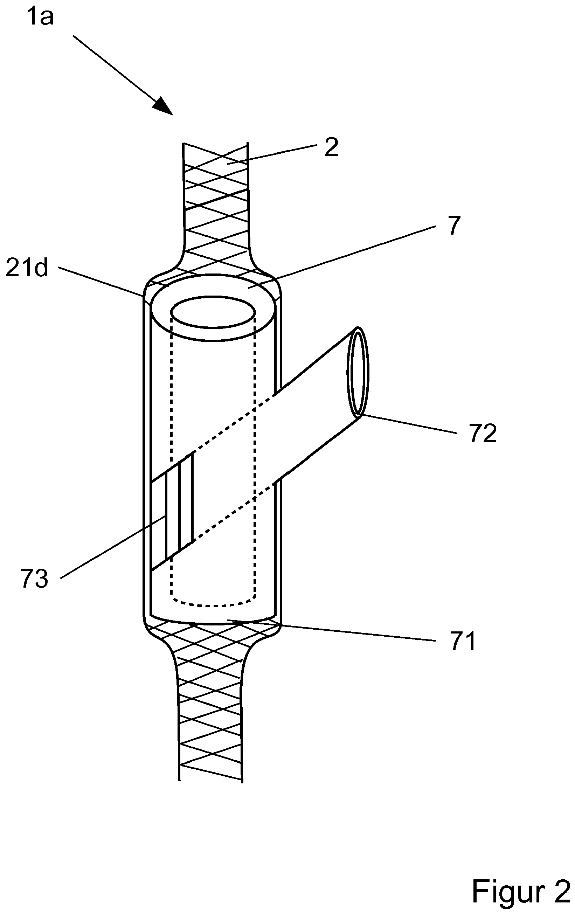

Figur 2 zeigt schematisch einen Ausschnitt einer weiteren Ausführungsform einer Haltevorrichtung 1a eines Halte- und/oder Fördersystems in einer perspektivischen Darstellung.

Die Haltevorrichtung 1a weist ein Führungselement 2 in Form eines dehnbaren Schlauches auf. Der Schlauch kann wie in der Ausführungsform von Figur 1 beschrieben ausgebildet sein.

Bei der Haltevorrichtung 1a weist das Führungselement 2 eine Verdickungsstelle 21 d auf, die durch Einbringen eines Rohrstutzens 7 in den Schlauch ausgebildet ist. Der Rohrstutzen 7 dehnt den Schlauch an der Verdickungsstelle 21 d. Ober- und unterhalb der Verdickungsstelle 21d weist der Schlauch seinen ungedehnten Durchmesser auf, zieht sich also nach dem Umschließen des Rohrstutzens 7 wieder zusammen und hält damit den Rohrstutzen 7 in seiner Position in dem Schlauch.

Seitlich an dem Rohrstutzen 7 ist ein Flanschanschluss 72 vorgesehen. In den Flanschanschluss 7 kann in einer Anwendungsvariante der Erfindung beispielsweise eine Pflanze gesteckt werden. Diese Ausführungsform der Erfindung kann dazu genutzt werden, um nachträglich etwas in den Schlauch einzubringen und/oder eine Fixierung an der Stelle des Rohrstutzens 7 anzubringen.

In der gezeigten Ausführungsform ist der Flanschanschluss 72 auf den Rohrstutzen 7 mit einem Gewinde 73 geschraubt. In anderen, nicht gezeigten Ausführungsbeispielen kann der Flanschanschluss 72 auch auf den Rohrstutzen 7 aufgesteckt werden. Der Flanschanschluss 72 ist seitlich durch eine Öffnung in dem Führungselement 2 geführt und hält damit den Rohrstutzen 7 zusätzlich an der gezeigten Stelle in dem Schlauch.

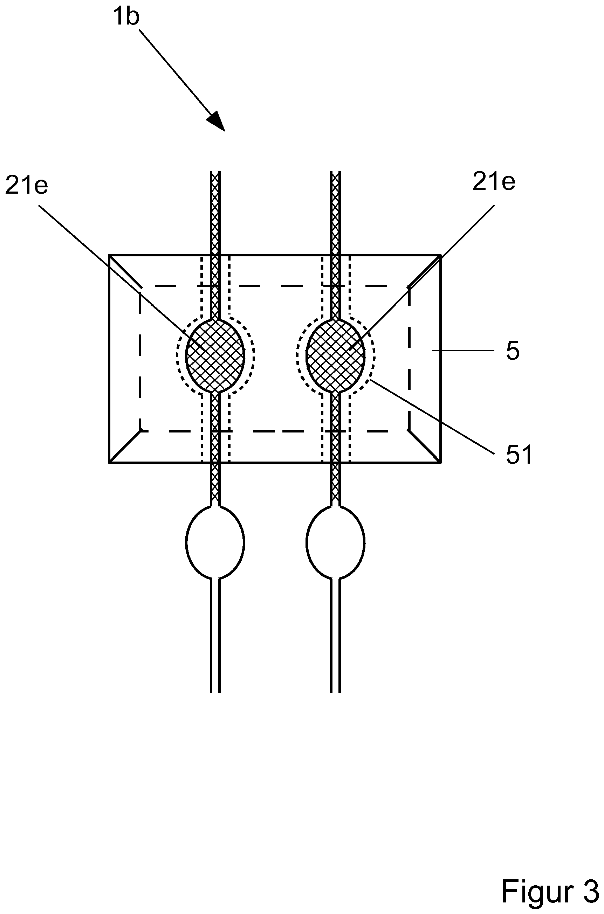

Figur 3 zeigt schematisch eine nächste Ausführungsform einer Haltevorrichtung 1 b eines Halte- und/oder Fördersystems in einer Draufsicht.

In der Ausführungsform von Figur 3 kommen zwei Führungselemente 2 mit darin vorgesehenen Verdickungsstellen 21e, die wie oben beschrieben ausgebildet sein können, zum Einsatz. Die beiden Führungselemente 2 sind durch zwei zueinander parallel vorgesehene Durchgangskanäle 51 in einer Tragplatte 5 geführt, wodurch die Tragplatte 5 mittels der beiden Führungselemente 2 gehalten wird. Die Tragplatte 5 bildet eine Brücke zwischen den beiden Führungselementen 2 aus, die es ermöglicht, die Haltevorrichtung 1 b als horizontales Fördersystem zu nutzen, indem beispielsweise Gegenstände auf die Tragplatte 5 gelegt und nachfolgend durch ein die Haltevorrichtung 1 b umfassendes Halte- und/oder Fördersystem transportiert werden. Die Verdickungsstellen 21e befinden sich dabei im Inneren der Verbindungsbrücke.

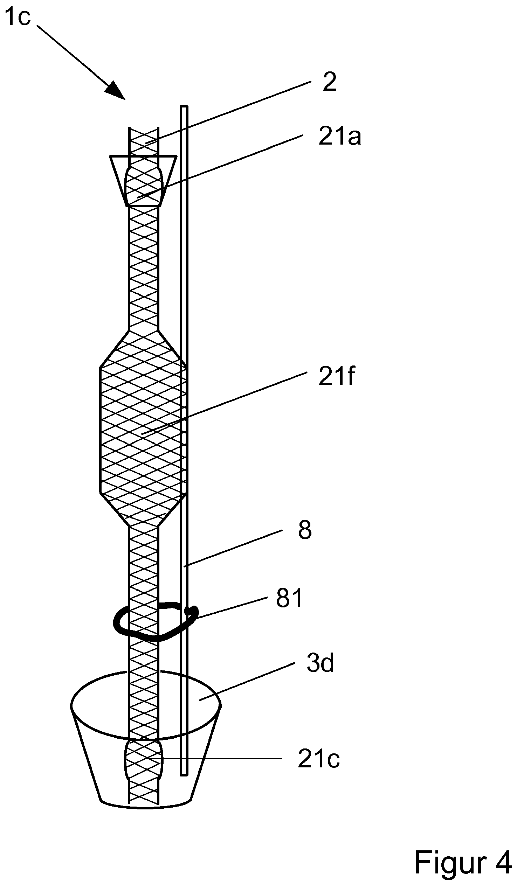

Figur 4 zeigt schematisch noch eine weitere Ausführungsform einer Haltevorrichtung 1c eines Halte- und/oder Fördersystems in einer perspektivischen Darstellung.

Die Haltevorrichtung 1c weist ein Führungselement 2 in Form eines dehnbaren Schlauches, der wie oben beschrieben ausgebildet sein kann, auf. Ähnlich wie in der Ausführungsform von Figur 1 ist an einem unteren Ende des Führungselementes 2 ein Objekt in Form eines mit seiner Kegelstumpfspitze 33 nach unten ausgerichteten Kegelstumpfs 3d unter Nutzung einer Verdickungsstelle 21 a des Führungselementes 2, die einen Gegenhalt zu einem in dem Kegelstumpf 3 vorgesehenen Haltering 32 bildet, gehalten. Im Unterschied zu dem Kegelstumpf 3 aus Figur 1 ist der Kegelstumpf 3d an seiner Kegelstumpfspitze 33 geschlossen, bildet also ein Auffanggefäß, zum Beispiel für durch das Führungselement 2 nach unten geleitetes Wasser, aus.

Ferner weist das Führungselement noch weitere Verdickungsstellen, wie beispielsweise die Verdickungsstelle 21g, die zur Wasserspeicherung dienen kann, auf. Dies ist beispielsweise dann günstig, wenn das Führungselement 2 gemäß einer Ausführungsform der vorliegenden Erfindung als Fluidleitung genutzt wird.

Parallel zu dem Führungselement 2 ist dezentral an der Haltevorrichtung 1c ein Fluidleitelement 8 vorgesehen. Das Fluidleitelement 8 kann beispielsweise wenigstens ein Rohr, ein Halm, eine Hohlfaser oder ein Schlauch sein. Das Fluidleitelement 8 kann beispielsweise, wie in Figur 4 gezeigt, mit Hilfe von Klemmen 81 an dem Führungselement 2 befestigt sein. In dem Beispiel von Figur 4 führt das Fluidleitelement 8 in den als Auffangbehälter dienenden Kegelstumpf 3d. Somit kann mit Hilfe des Fluidleitelementes 8 in dem Kegelstumpf 3d aufgefangene Flüssigkeit durch Unterdruck nach oben gefördert werden, wobei die Flüssigkeitszuführung zentral über das Führungselement 2 und die Flüssigkeitsableitung dezentralisiert über das Fluidleitelement 8 vorgenommen werden kann. Dadurch kann man die gezeigte Haltevorrichtung 1c überall aufhängen und ist nicht an ein fixes Auffangbecken gebunden.

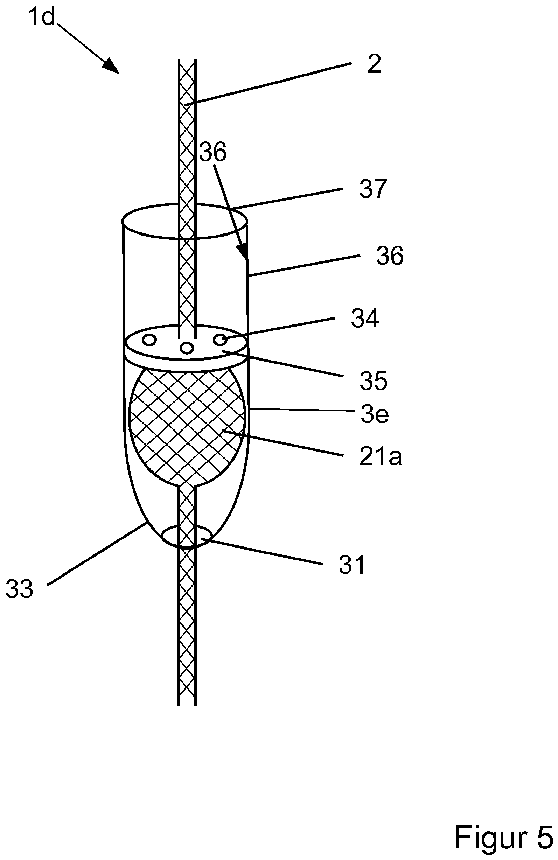

Figur 5 zeigt schematisch ein Detail einer weiteren möglichen Ausführungsform einer Haltevorrichtung 1d eines Halte- und/oder Fördersystems in einer perspektivischen Darstellung.

Bei der Haltevorrichtung 1d ist an dem wie oben beschrieben ausbildbaren Führungselement 2 ein Objekt in Form eines mit seiner Kegelstumpfspitze 33 nach unten ausgerichteten Kegelstumpfs 3e vorgesehen. Im Innenraum des Kegelstumpfs 3e ist ein Haltering 35 mit einer Durchgangsöffnung 31 für das Führungselement 2 und Durchtrittslöchern 34 für Flüssigkeit vorgesehen. Die Durchtrittslöcher 34 bilden einen Siebboden aus, mit dem beispielsweise verschiedene lockere Schüttungen gehalten werden können.

Die Verdickungsstelle 21 a des Führungselementes 2 ist zwischen der Kegelstumpfspitze 33 und dem Haltering 35 vorgesehen. Somit kann in den unteren Bereich des Kegelstumpfs 3e laufende und sich darin sammelnde Flüssigkeit wieder an den Schlauch bzw. das Führungselement 2 zurückgeführt werden.

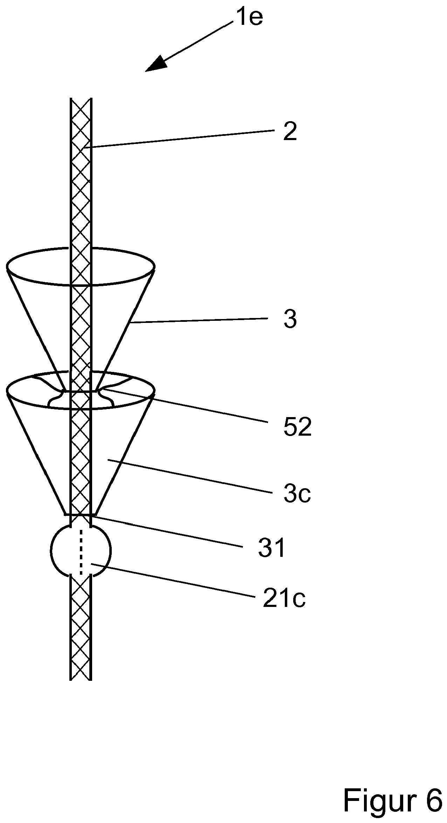

Figur 6 zeigt schematisch ein bereits oben beschriebenes Detail 1e der Haltevorrichtung 1 aus Figur 1 in einer perspektivischen Darstellung, wobei zwei kegelstumpfförmige Objekte 3 und 3c ineinander stapelbar an dem Führungselement 2 gehalten sind. Die Fixierung der Objekte 3, 3c erfolgt außenliegend durch die Verdickungsstelle 21 c, auf welcher die verschiedenen Objekte 3, 3c, die hier nur beispielhaft gezeigt sind, aufgesetzt werden können. Die Verdickungsstelle 21 c kann vorteilhaft nach einem Aufreihen der Objekte 3, 3c an dem Führungselement angebracht werden. Die umgekehrten Kegelstümpfe 3, 3c können als Becher oder Gefäße genutzt werden und ineinander geschoben bzw. gesteckt werden. Dabei erlaubt das Stecksystem ein großes Befüllvolumen.

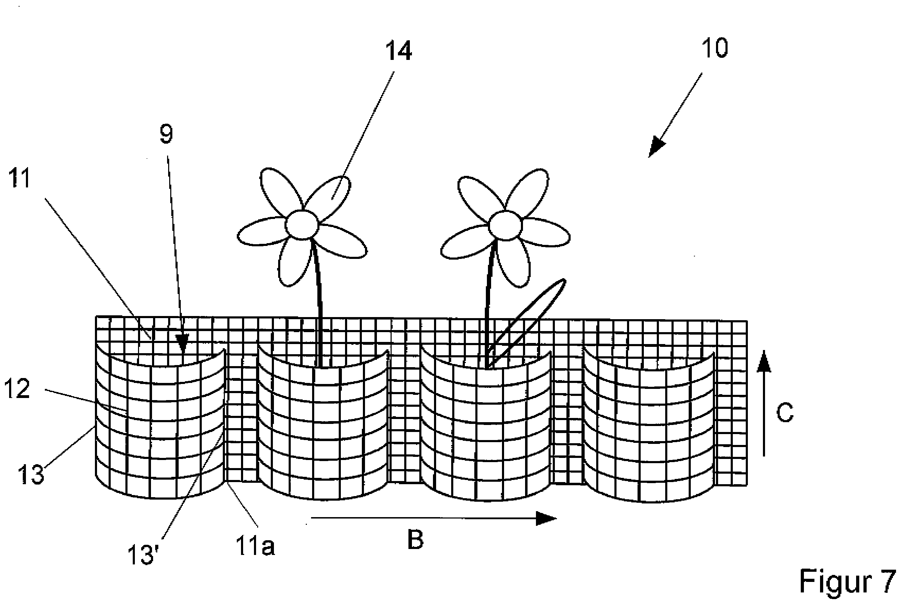

Figur 7 zeigt schematisch einen Ausschnitt einer anderen Ausführungsform einer Haltevorrichtung 10 eines Halte- und Fördersystems in einer perspektivischen Darstellung.

Die Haltevorrichtung 10 weist ein einen Aufnahmebehälter oder ein Tragelement ausbildende Objekt auf, wobei das Objekt aus zwei Bändern 11, 12 ausgebildet ist. In der Ausführungsform von Figur 7 erstreckt sich ein zweites Band 12 längs eines ersten Bandes 11, wobei die Bänder 11, 12 an einer Längsseite 11 a sowie an voneinander in Längsrichtung B der Bänder 11, 12 beabstandeten Stellen unter Ausbildung von einseitig offenen Taschen 9 miteinander verbunden sind. In die Taschen 9 können beispielsweise, wie in Figur 7 gezeigt, Pflanzen 14 eingebracht werden.

Die Haltevorrichtung 10 ist also ein textiles Breitband mit Taschen 9. Das Breitband kann horizontal und vertikal installiert werden. Eine Befüllung der Taschen 9 kann jedoch nur von einer Seite erfolgen. Dabei können die Taschen 9 entweder oben oder unten oder seitlich geöffnet sein. Die Haltevorrichtung 10 kann als sehr weiches und flexibles System zur Verfügung gestellt werden, das einen aufrechten horizontalen Transport oder eine horizontale Aufhängung erlaubt.

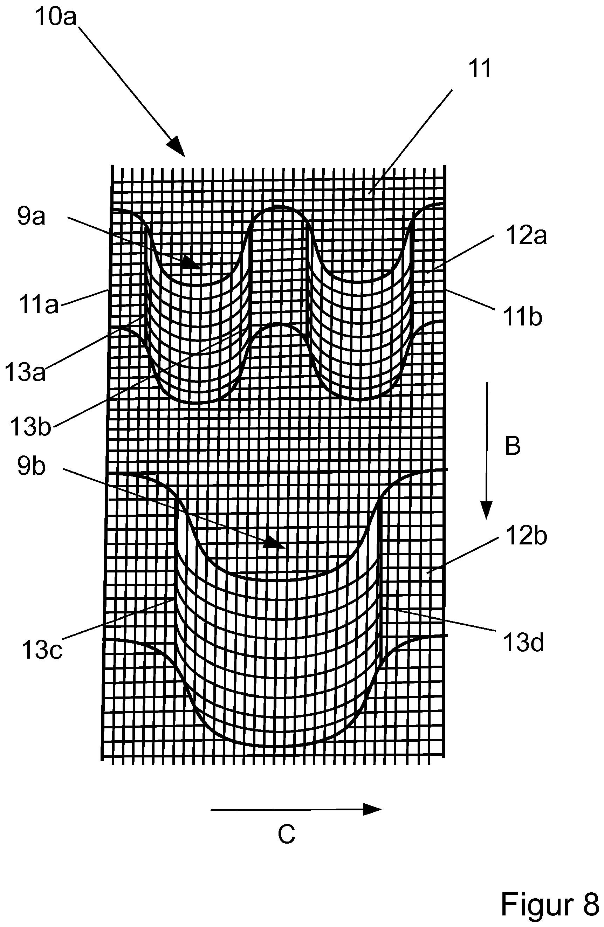

Figur 8 zeigt schematisch einen Ausschnitt einer weiteren Ausführungsform einer Haltevorrichtung 10a eines erfindungsgemäßen Halte- und Fördersystems in einer perspektivischen Darstellung.

Bei der Haltevorrichtung 10a ist das einen Aufnahmebehälter oder ein Tragelement ausbildende Objekt aus einem sich in einer Längsrichtung B erstreckenden Band 11 und sich in Querrichtung C zu dem Band 11 erstreckenden Bändern 12a, 12b ausgebildet. Dabei sind die jeweils die Enden der sich quer erstreckenden Bänder 12a, 12b mit jeweils einer Längsseite 11a, 11 b des Bandes 11, beispielsweise durch Nähen oder Weben, verbunden. Ferner sind die querliegenden Bänder 12a, 12b unter Ausbildung wenigstens einer einseitig offenen Tasche 9a, 9b in Längsrichtung B des Bandes 11 mit diesem verbunden.

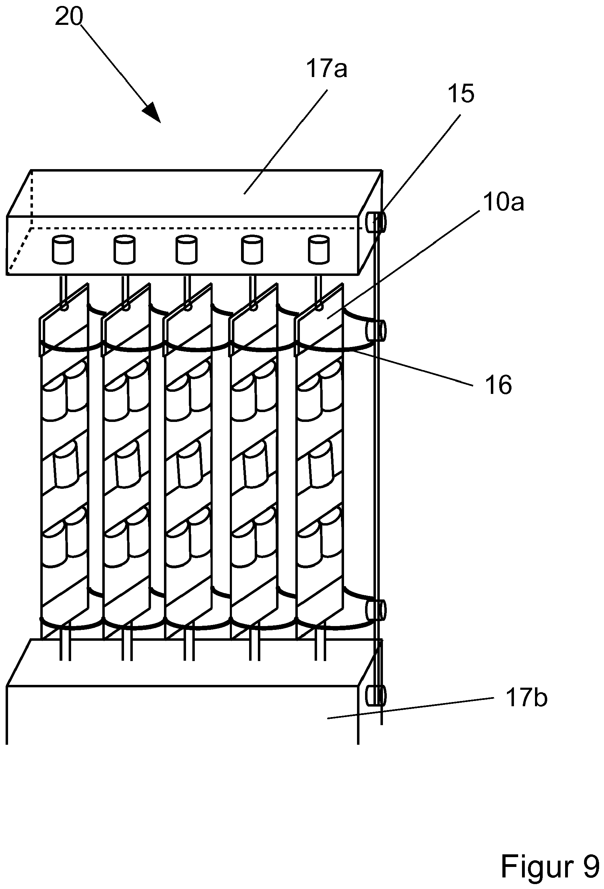

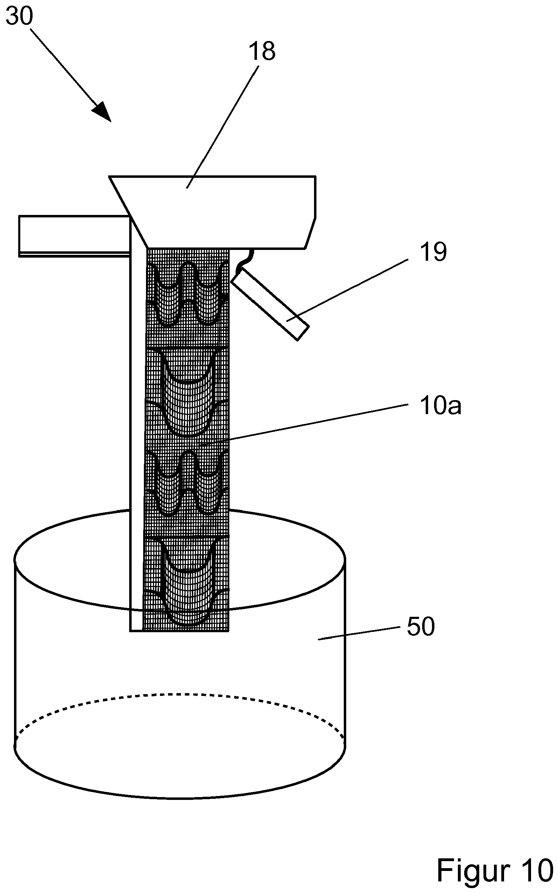

Die Haltevorrichtung 10a bildet demnach auch ein textiles Breitband mit Taschen 9a, 9b aus. Dabei können ein oder mehrere solcher Breitbänder beispielsweise in der Vorrichtung von Figur 9 und/oder von Figur 10 verwendet werden. Die Breitbänder lassen sich zudem so installieren, dass man eine ideale Ausrichtung zu einem Luft- und/oder Gasstrom und/oder zu einer Lichteinstrahlung erreicht.

Figur 9 zeigt schematisch eine Ausbildung eines erfindungsgemäßen Halte- und Fördersystems 20 in einer perspektivischen Darstellung.

Das Halte- und Fördersystem 20 weist eine Anzahl streifenförmiger Haltevorrichtungen 10a auf, die an einer Aufhängeeinrichtung 17a, 17b aufgehängt sind. Anstelle der Haltevorrichtungen 10a und/oder in Ergänzung zu den Haltevorrichtungen 10a können in anderen, nicht gezeigten Ausführungsformen der vorliegenden Erfindung auch andere Haltevorrichtungen wie die Haltevorrichtungen 1, 1 a, 1 b, 1 c, 1 d, 1 e, 10 aus anderen Ausführungsformen der vorliegenden Erfindung angewendet werden.

Wie es in Figur 9 gezeigt ist, sind die Haltevorrichtungen 10a jalousieartig drehbar aufgehängt, sodass ihre horizontale Winkelausrichtung durch eine die Haltevorrichtungen 10a koppelnde Koppel- und Drehvorrichtung 16 veränderbar ist. Ferner ist in der Ausführungsform von Figur 9 die obere Aufhängeeinrichtung 1a mit einem Kanalsystem 15 mit einem Fluidzulauf und einem Fluidablauf gekoppelt, sodass die Haltevorrichtungen bzw. deren Inhalte von oben z. B. mit Wasser versorgt werden können.

Figur 10 zeigt schematisch eine andere Ausbildung eines erfindungsgemäßen Halte- und Fördersystems 30 in einer perspektivischen Darstellung.

Das Halte- und/oder Fördersystem 30 weist einen Mitnehmer 18 auf, mit dem wenigstens eine erfindungsgemäße Haltevorrichtung 10a in ein Flüssigkeitsreservoir 50 führbar ist. In anderen, nicht gezeigten Ausführungsformen der vorliegenden Erfindung können anstelle und/oder in Ergänzung zu der Haltevorrichtung 10a bei dem Halte- und/oder Fördersystem 30 auch andere erfindungsgemäße Haltevorrichtungen, wie die Haltevorrichtungen 1, 1 a, 1 b, 1 c, 1 d, 1 e, 10, zum Einsatz kommen. Mit Hilfe der Haltevorrichtung 10a können beispielsweise in dem Flüssigkeitsreservoir vorliegende Verunreinigungen aufgenommen werden, daraufhin mit einer Abstreifeinrichtung 19 des Halte- und/oder Fördersystems 30 abgestreift und nachfolgend entsorgt werden. Das Halte- und/oder Fördersystem 30 eignet sich somit sehr gut sowohl zur Reinigung von fließenden Gewässern als auch von stehenden Flüssigkeiten.

Das Halte- und/oder Fördersystem 30 kann insbesondere als Bandskimmer verwendet werden, mit dem aus Schüttungen und zum Beispiel schwammartigen Strukturen, welche sich in den Taschen 9, 9a, 9b der Haltevorrichtung(en) 10, 10a befinden, Flüssigkeiten herausgedrückt und transportiert werden. Das Flüssigkeitsreservoir 50, aus dem Flüssigkeiten mit dem Bandskimmer entnommen werden, kann beispielsweise ein Flüssigkeitsbecken mit einer zu oxidierenden Substanz sein.

Mit der vorliegenden Erfindung wird ein in vielfältiger Weise ausbildbares Halte- und/oder Fördersystem auf textiler Basis zur Verfügung gestellt, das unter anderem zum Transport und zur Befestigung als auch zur Trocknung von Feststoffen und Schüttungen sowie zur Reaktion von feuchten Feststoffen und Schüttungen mit Gasen genutzt werden kann.

## Patentansprüche

1. Halte- und/oder Fördersystem mit wenigstens einer sich streifenförmig erstreckenden Haltevorrichtung (10a) mit wenigstens einem einen Aufnahmebehälter oder ein Tragelement ausbildenden und an der Haltevorrichtung (10a) zu haltenden und/oder zu befördernden Objekt,
**dadurch gekennzeichnet,**
**dass** das wenigstens eine Objekt wenigstens eine einseitig offene Tasche (9a, 9b) ist und die Haltevorrichtung (10a) ein textiles Breitband mit den Taschen (9a, 9b) ist, wobei wenigstens zwei Haltevorrichtungen (10a) vertikal an wenigstens einer sich horizontal erstreckenden Aufhängeeinrichtung (17a, 17b) befestigt sind und die Haltevorrichtungen (10a) jalousieartig und/oder lamellenvorhangartig in ihrer Ausrichtung veränderbar miteinander verbunden sind.

2. Halte- und/oder Fördersystem nach Anspruch 1, **dadurch gekennzeichnet, dass** in der wenigstens einen Tasche (9a, 9b) wenigstens ein Substrat und/oder wenigstens eine Pflanze (14) und/oder wenigstens ein Feststoff und/oder wenigstens eine Schüttung und/oder wenigstens ein schwammartiges Material vorgesehen ist.

3. Halte- und/oder Fördersystem nach Anspruch 1 oder 2, **dadurch gekennzeichnet, dass** die Aufhängeeinrichtung (17a, 17b) ein Kanalsystem (15) mit einem Fluidzulauf und einem Fluidablauf aufweist.

4. Halte- und/oder Fördersystem nach wenigstens einem der vorhergehenden Ansprüche, **dadurch gekennzeichnet, dass** die wenigstens eine Haltevorrichtung (10a) an einem Mitnehmer (18) vorgesehen ist, mit dem sie durch ein Flüssigkeitsreservoir (50) führbar ist, wobei an dem Mitnehmer (18) wenigstens ein Abstreifer (19) zum Herausdrücken von Flüssigkeit aus der Haltevorrichtung (10a) und/oder wenigstens einem Objekt der Haltevorrichtung (10a) und/oder des Inhaltes wenigstens einer Tasche (9a, 9b) der Haltevorrichtung (10a) vorgesehen ist.

5. Halte- und/oder Fördersystem nach wenigstens einem der vorhergehenden Ansprüche, **dadurch gekennzeichnet, dass** einen Aufnahmebehälter oder ein Tragelement ausbildende Objekt aus einem sich in einer Längsrichtung (B) erstreckenden Band (11) und sich in Querrichtung (C) zu dem Band (11) erstreckenden Bändern (12a, 12b) ausgebildet ist, wobei jeweils die Enden der sich quer erstreckenden Bänder (12a, 12b) mit jeweils einer Längsseite (11 a, 11 b) des Bandes (11) durch Weben verbunden sind und die querliegenden Bänder (12a, 12b) unter Ausbildung wenigstens einer der einseitig offenen Taschen (9a, 9b) in der Längsrichtung (B) des Bandes (11) mit diesem durch Weben verbunden sind.
